# EUROPÄISCHE PATENTSCHRIFT

(11) **EP 0 850 192 B1**
(45) Veröffentlichungstag und Bekanntmachung des Hinweises auf die Patenterteilung: **12.01.2000**
(21) Anmeldenummer: 96931012.7
(22) Anmeldetag: 04.09.1996
(51) Int. Cl.: C01B 15/10

(54) **VERFAHREN ZUR HERSTELLUNG VON NATRIUMPERCARBONAT**
PROCESS FOR THE PRODUCTION OF SODIUM PERCARBONATE
PROCEDE DE PRODUCTION DE PERCARBONATE DE SOUDE

(30) Priorität: 11.09.1995 DE 19533524
(43) Veröffentlichungstag der Anmeldung: 01.07.1998
(73) Patentinhaber: Solvay Interox GmbH, 30173 Hannover (DE)
(72) Erfinder: MATHES, Manfred, D-53557 Bad Hönningen (DE); DÖTSCH, Werner, D-53557 Bad Hönningen (DE)
(74) Vertreter: Gosmann, Martin
(86) Internationale Anmeldenummer: EP9603871
(87) Internationale Veröffentlichungsnummer: WO9710173

(56) Entgegenhaltungen:
- EP-A- 0 070 711
- FR-A- 1 238 528
- FR-A- 2 016 936
- FR-A- 2 197 811
- US-A- 3 801 706

## Beschreibung

Die vorliegende Erfindung betrifft ein Verfahren zur Herstellung von homogenem, teilchenförmigem Natriumpercarbonat (im folgenden auch kurz "PCS" genannt) mit Aktivsauerstoffgehalten von wenigstens 10 Gew.-%, insbesondere 13,5 bis 14,5 Gew.-%.

Natriumpercarbonat wird als bleichender Bestandteil in pulverförmigen Wasch-, Bleich- und Reinigungsmitteln verwendet. Es zeichnet sich durch eine gute Wasserlöslichkeit sowie eine rasche Freisetzung des Wasserstoffperoxides aus und ist umweltfreundlich, da seine Zerfallsprodukte die Umwelt nicht belasten.

Für Natriumpercarbonat wird in der Literatur die Summenformel Na₂CO₃ · 1,5 H₂O₂ mit einem theoretischen Aktivsauerstoffgehalt von 15,28 Gew.-% angegeben. Hierbei ist jedoch zu berücksichtigen, daß technisch aus Wasserstoffperoxid und Soda hergestelltes Natriumpercarbonat im allgemeinen keine derart wohldefinierte, homogene Verbindung ist, sondern einerseits ein Gemisch aus verschiedenen Hydratwasser-haltigen Verbindungen der Formeln

Na₂CO₃·1,5 H₂O₂

Na₂CO₃·1,5 H₂O₂·H₂O

Na₂CO₃·2 H₂O₂·H₂O

Na₂CO₃·2 H₂O₂

Na₂CO₃·x H₂O₂

darstellt und andererseits je nach Herstellverfahren zusätzlich noch einen gewissen Anteil an nichtoxidierter Soda sowie weitere herstellungsbedingte Zusätze, wie z. B. Natriumsulfat oder Kochsalz, enthält. Sowohl durch die Herstellungsbedingungen als auch durch die jeweiligen Zusätze werden die Produkteigenschaften nicht nur in bezug auf die Stabilität, sondern auch im Hinblick auf z. B. den Aktivsauerstoffgehalt, die Löslichkeit und das Schüttgewicht bzw. die Korngröße des Natriumpercarbonates entscheidend geprägt. So beträgt der erreichbare Aktivsauerstoffgehalt in technischem Natriumpercarbonat nur in günstigen Fällen 13,4 bis 14,5 Gew.-%, ist aber bedingt durch herstellungsbedingte Zusätze (Sulfat, Kochsalz) sowie stabilisierende Maßnahmen oftmals weitaus niedriger. Auch ist die an sich gute Löslichkeit des Natriumpercarbonates oftmals vermindert, beispielsweise durch herstellungsbedingte Anwesenheit von anderen Salzen wie Soda, Natriumsulfat und Kochsalz. Ferner ist die erzielbare Schüttdichte bzw. Korngröße des Natriumpercarbonats bei den Herstellverfahren des Standes der Technik im allgemeinen nur wenig variabel und wird meist durch die Verfahrensart oder die eingesetzte Soda von vornherein auf enge Wertebereiche eingegrenzt.

Zunehmend besteht jedoch der Wunsch nach Natriumpercarbonaten mit hohem Aktivsauerstoffgehalt und verschiedenen Schüttdichten bzw. Korngrößen, jeweils gemäß den verschiedenen Anforderungen der Waschmittelhersteller, beispielsweise für Anwendungen in leichten Pulverwaschmitteln mit niedriger Schüttdichte oder in kompakten Waschmitteln mit hoher Schüttdichte der Wasch-, Bleich- und Reinigungsmittelbestandteile. Hierbei ist es insbesondere auch erforderlich, die Schüttdichten der einzelnen Bestandteile solcher Zusammensetzungen aufeinander abzustimmen, um eine Entmischung, die bei unterschiedlichen Schüttgewichten der Bestandteile zwangsläufig auftreten würde, weitgehend auszuschließen.

Zur Herstellung von Natriumpercarbonat sind im Stand der Technik drei Technologien bekannt: Kristallisationsverfahren, Sprühverfahren und Trockenverfahren.

In der Regel wird Natriumpercarbonat durch das Kristallisationsverfahren hergestellt. Hierbei wird eine Lösung oder Suspension von Soda mit Wasserstoffperoxid bei 10 bis 20 °C umgesetzt und in Gegenwart von Stabilisatoren wie beispielsweise Wasserglas, anorganischen oder organischen Phosphonsäuren etc. kristallisiert. Wegen der guten Löslichkeit des Natriumpercarbonates ist es jedoch erforderlich, zur Erhöhung der Ausbeute das Natriumpercarabonat aus dem Reaktionsgemisch auszusalzen, wozu im Stand der Technik vorzugsweise Kochsalz in einer Konzentration von etwa 240 g/l in das Reaktionsgemisch eingetragen wird. Die Kristallisation ist jedoch schwer zu steuern, so daß es sich zwecks Ausbildung einer günstigen Kristalltracht empfiehlt, sogenannte Kristallisationsverbesserer wie Polyphosphate oder Polyacrylate zuzusetzen. Das kristallisierte Natriumpercarbonat wird dann abzentrifugiert und in an sich üblichen Verfahren, beispielsweise im Wirbelbett getrocknet. Das durch Kristallisationsverfahren erhaltene PCS ist für viele Anwendungen jedoch noch nicht optimal.

In der FR-A-1238528 wird z.B. ein Kristallisationsverfahren beschrieben, das zwar eine erhöhte Ausbeute an Percarbonat liefert, das aber nur relativ gering konzentrierte Wasserstoffperoxid-Lösungen einsetzt. Die angegebenen Konzentrationen von Wasserstoffperoxid liegen im Bereich von 10 bis 25 Gew.-%igen H₂O₂, wobei in den Beispielen lediglich eine 14,4 bis 20 Gew.-%ige Wasserstoffperoxid-Lösung für die Umsetzung eingesetzt wird. Der Wasseranteil im Verfahren gemäß der FR-A-1238528 ist daher noch relativ hoch und die Feststoffgehalte sind dementsprechend gering. So liegt beispielsweise der Wasseranteil in den Beispielen der FR-A-1238528 im Bereich von etwa 51,6 bis 56,1 Gew.-%. In diesem Verfahren des Standes der Technik muß daher ein hoher Wasseranteil durch Abfiltrieren der Mutterlauge vom niedergeschlagenen Percarbonat entfernt werden, bevor das erhaltene, immer noch sehr nasse Präzipitat anschließend über längere Zeiträume (z.B. 4 Stunden) getrocknet werden kann.

Sprühverfahren zur Herstellung von Natriumcarbonat sind in der Patentliteratur z.B. in der GB 722 351 und den US-Patentschriften US 3,555,696 und US 3,801,706 beschrieben. Bei diesen Verfahren ist es nicht erforderlich zu filtrieren oder zu zentrifugieren, um das Natriumpercarbonat von der Mutterlauge zu entfernen. Vielmehr wird bei diesen Sprühverfahren eine wäßrige Lösung (oder ggf. auch eine gering konzentrierte Suspension) aus Soda und Wasserstoffperoxid in einem Sprühtrockner getrocknet. Sprühtrocknungsprodukte besitzen in der Regel jedoch eine sehr niedrige Schüttdichte von etwa nur 0,35 kg/l und sind daher für heutige Waschmittelformulierungen, die zunehmend granulare Bestandteile mit höheren Schüttdichten enthalten, als solche noch nicht verwendbar. Zudem besteht bei dem Sprühtrocknungsverfahren das Problem, daß insbesondere bei der Verwendung von Suspensionen eine starke Neigung zur Klumpenbildung beobachtet wird. Hierdurch wird der Sprühvorgang mitunter erheblich beeinträchtigt, da ein häufiges Reinigen verstopfter Düsen erforderlich ist oder das Versprühen der Lösung gänzlich unmöglich wird. Die Sprühtrocknungsverfahren des Standes der Technik arbeiten daher bevorzugt mit Lösungen. So wird z.B. gemäß der GB 722 351 eine Mischung aus Soda-Lösung und Wasserstoffperoxid in den Sprühtrockner überführt, noch bevor eine etwaige Kristallisation von PCS beginnt.

Beim Versprühen von verdünnten Lösungen muß jedoch viel Wasser entfernt werden, was jedoch zusätzlichen Energieaufwand erfordert. Versucht man zur Erhöhung der Löslichkeit die Temperatur der Speiselösung für den Sprühtrockner anzuheben, beobachtet man gemäß US 3,555,696 zunehmende Zersetzungsvorgänge bereits in der Speiselösung. Das führt zu Aktivsauerstoffverlusten und zu Unregelmäßigkeiten im Sprühprozeß. Die US 3,555,696 schlägt zur Lösung dieser Probleme vor, die Speiselösung für den Sprühtrockner nur aus stabilen Basisverbindungen (Soda) herzustellen und Wasserstoffperoxid erst unmittelbar vor dem Versprühen in diese Speiselösung einzuführen. Die Soda-Konzentration bleibt aber auch bei diesem Verfahren mit etwa 20 Gew.-% noch gering und zur Vermeidung von Zersetzungen wird bei niedrigen, für die Praxis wenig geeigneten Trocknungstemperaturen gearbeitet (Einlaß 73°C, Auslaß 46°C). Weiterhin ist das Verfahren nur schwierig zu steuern.

Nach dem Verfahren der US 3,801,706 wird durch Mischen einer wäßrigen Wasserstoffperoxid-Lösung von wenigstens 40 Gew.-% mit einer bei 20 bis 25°C im wesentlichen gesättigten Soda-Lösung ein Speisegemisch für den Sprühtrockner erzeugt, welches bereits einen Teil des gebildeten PCS in kristallisierter Form enthält. Das Verfahren ist jedoch noch nicht optimal, da der PCS-Gehalt im Speisegemisch in etwa 20 Gew.-% nicht übersteigt.

In Abwandlungen des Sprühverfahrens werden beispielsweise Lösungen aus Soda und Wasserstoffperoxid kontinuierlich auf ein mit Heißluft fluidisiertes Bett aus vorgelegtem Natriumpercarbonat aufgesprüht. Die Sprüh- und Trocknungsstufe kann alternativ einstufig oder zweistufig ausgeführt werden. In einer weiteren Abwandlung des Sprühverfahrens werden Lösungen aus Natriumcarbonat und Wasserstoffperoxid durch getrennte Düsen in eine Reaktionskammer eingedüst, wobei man durch die Reaktionskammer gleichzeitig ein heißes Gemisch aus Luft und Kohlendioxid hindurchleitet. Nach diesem Verfahren wird jedoch ein ziemlich poröses Natriumpercarbonat erhalten, welches im Hinblick auf Schüttdichte und Abriebfestigkeit nicht die Anforderungen für Waschmittelzusammensetzungen heutigen Standards erfüllt.

Nach den sogenannten Trockenverfahren wird Natriumpercarbonat hergstellt, indem man wasserfreies oder hydratisiertes Natriumcarbonat (mit 75 bis 90 Gew.-% Na₂CO₃) mit einer konzentrierten Wasserstoffperoxidlösung von 50 bis 80 Gew.-% umsetzt und bereits während der Umsetzung die geringen Mengen an freigesetztem Wasser abdampft. Bei diesem Verfahren liegt während der gesamten Umsetzung ein im wesentlichen (weitgehend) trockenes Reaktionsgemisch vor. Das Verfahren kann beispielsweise in Mischern, in Fließbettreaktoren oder auch in Rohrreaktoren mit Eindüsvorrichtungen für H₂O₂ durchgeführt werden. Außer den langen Reaktionszeiten hat dieses Verfahren den Nachteil, daß eine Reinigung des derart hergestellten Natriumcarbonates nicht stattfindet, so daß zusätzliche Maßnahmen zur Stabilisierung des Produktes, beispielsweise Zusatz spezieller Stabilisatoren bereits während der Umsetzung getroffen werden müssen. Darüber hinaus ist dieses Verfahren im Hinblick auf die Granulateigenschaften des Natriumpercarbonats, z. B. im Hinblick auf Schüttdichte und Korngröße, wenig variabel, da die Gestalt des Natriumpercarbonat-Granulates im wesentlichen (d. h. abgesehen von geringfügigen durch die Umsetzung bedingten Rundungen) der Granulatform der eingesetzten Soda entspricht. Insbesondere bei Herstellung von Natriumpercarbonat-Granulaten mit hoher Schüttdichte für Kompaktwaschmittel muß daher schwere Soda eingesetzt werden, bei der jedoch für die Reaktion mit Wasserstoffperoxid nur wenig Oberfläche zur Verfügung steht. Die Umsetzung ist also unvollständig, so daß nur geringere Aktivsauerstoffgehalte sowie nur inhomogene Produkte mit höherem, ungleichmäßig verteiltem Sodaanteil erhalten werden, dessen Alkalität die Stabilität des Produktes beeinträchtigt.

Die vorliegende Erfindung hat sich die Aufgabe gestellt, die Nachteile des Standes der Technik im Hinblick auf die Natriumpercarbonat-Herstellung zu überwinden und ein effizient durchführbares Herstellverfahren mit hoher Flexibilität bereitzustellen, welches es gestattet, hochwertiges Natriumpercarbonat mit variablen, insbesondere aber hohen Aktivsauerstoff-Gehalten und variablen Granulat-Parametern gemäß der jeweils vorgesehenen Verwendung bereitzustellen.

Die Aufgabe wird gelöst durch das in den Ansprüchen angegebene, erfindungsgemäße Verfahren zur Herstellung von Natriumpercarbonat.

Das erfindungsgemäße Verfahren zur Herstellung von homogenen, teilchenförmigen Natriumpercarbonat (Natriumpercarbonat-Partikel, PCS-Partikel) zeichnet sich dadurch aus, daß
a) in einem Vorlagebehälter, je nach gewünschtem Aktivsauerstoff-Gehalt der herzustellenden PCS-Partikel, eine 30 bis 50 gew.-%ige wäßrige Wasserstoffperoxid-Lösung vorgelegt und unter intensiver Durchmischung bei Temperaturen bis maximal 80°C eine ca. 1,1-fache bis 0,6-fache, auf das eingesetzte H₂O₂ bezogene molare Menge feste Soda zudosiert wird, und nach ausreichender Reaktionszeit unter Bildung einer PCS-Partikel-Aufschlämmung mit einem Wasseranteil von maximal etwa 40 Gew.-%
b) die gebildeten PCS-Partikel mit einem Aktivsauerstoff-Gehalt von wenigstens 13,5 Gew.-% durch eine Kurzzeittrocknung aus der gemäß a) erhaltenen Partikel-Aufschlämmung gewonnen werden und gegebenenfalls die PCS-Partikel gleichzeitig und/oder nachfolgend noch granuliert werden.
Im Reaktionsschritt a) wird aus der wäßrigen Wasserstoffperoxid-Lösung und dem festen Natriumcarbonat (Soda) ein Reaktionsbrei bzw. eine Reaktionspaste (Slurry) mit Feststoff-Gehalten von in etwa 60 bis 75 Gew.-% (d.h. Trockensubstanz, insbesondere PCS-Gehalt) hegestellt und danach in einem zweiten Schritt b) der gebildete Reaktionsbrei zur Gewinnung des teilchenförmigen Natriumpercarbonates mit gewünschter Korngröße und Schüttdichte einer Kurzzeittrocknung und gegebenenfalls einer gleichzeitigen und/oder nachfolgenden Granulation unterworfen. Hierbei wird im Schritt a) die feste Soda in einer auf das eingesetzte H₂O₂ bezogenen, 1,1-fachen (für niedrigen Avox-Gehalt) bis 0,6-fachen (für hohe Avox-Gehalte) molaren Menge zur vorgelegten Wasserstoffperoxidlösung zudosiert. Unter Berücksichtigung weiterer üblicher Additive, wie an sich übliche Stabilisatoren und gegebenenfalls bereits zugesetzten Granulierhilfsmitteln, beträgt der Wasseranteil in den hergestellten PCS-Aufschlämmungen (Slurry) maximal etwa 40 Gew.-% (Einsat einer etwa 30 bis 35 Gew.-%igen 10 Gew.-%iger H₂O₂-Lösung) bis 25 Gew.-% (Einsatz 50 Gew.-%iger H₂O₂-Lösung). Arbeitet man mit H₂O₂-Lösung, beträgt der Wasseranteil in der PCS-Slurry in etwa nur ca. 40 Gew.-%.

Das vorstehende erfindungsgemäße Verfahren unterscheidet sich wesentlich von den Verfahren des Standes der Technik. Von den Kristallisationsverfahren, die mit Lösungen oder Suspensionen geringen Feststoffgehaltes (Feststoffgehalte bis maximal etwa 15 bis 20 Gew.-% Soda) arbeiten und die die Nachteile einer schwierig steuerbaren Kristallisation sowie eines hohen Energieaufwandes zur Wasserentfernung mit sich bringen, unterscheidet sich das erfindungsgemäße Verfahren dadurch, daß der im Reaktionsschritt a) hergestellte Reaktionsbrei (die Reaktionspaste) wesentlich höhere Feststoffgehalte als die bei den Kristallisationsverfahren aufweist. Zum anderen unterscheidet sich das erfindungsgemäße Verfahren (als sogenanntes Slurry-Verfahren) auch erheblich von den im Stand der Technik beschriebenen Trockenverfahren. Im Gegensatz zu den Trockenverfahren des Standes der Technik, die feste Soda und hochkonzentriertes Wasserstoffperoxid (wenigstens 50 Gew.-%) einsetzen und die Reaktion und die Trocknung in einem Schritt (simultan) durchführen (also ein im wesentlichen trockenes Reaktionsgemisch erzeugen), liegt im erfindungsgemäßen Verfahren eine deutlich feuchte, gut pumpfähige Masse (Slurry, d.h. ein Brei oder eine Paste) vor, die neben ihrem Feststoffgehalt an umzusetzender Soda bzw. bereits gebildetem Natriumpercarbonat einen moderaten Wasseranteil aufweist. Im erfindungsgemäßen Verfahren ist es daher nicht notwendig, derart hochkonzentriertes Wasserstoffperoxid wie in den Trockenverfahren einzusetzen, sondern man arbeitet mit Konzentrationen bis maximal 50 Gew.-%, d.h. mit Wasserstoffperoxid-Lösungen von 30 bis 50 Gew.-%; insbesondere arbeitet man mit Wasserstoffperoxid-Lösungen mit H₂O₂-Konzentrationen unter 40 Gew.-%. Zwar ist nach dem erfindungsgemäßen Verfahren geringfügig mehr Wasser als nach den Trockenverfahren zu entfernen, doch wird der dadurch bedingte geringfügige Mehraufwand an Energie durch die übrigen Vorteile des erfindungsgemäßen Verfahrens mehr als ausgeglichen. Das erfindungsgemäße Verfahren zur Herstellung von Natriumpercarbonat hält eine vorteilhafte, ausgewogene Balance zwischen Feststoff- und Feuchtigkeitsgehalt (Wassergehalt) im Reaktionsgemisch ein und führt daher zu optimalen Ergebnissen bzw. Eigenschaften des hergestellten Produktes.

Nach dem erfindungsgemäßen Verfahren kann ein Natriumpercarbonat mit variablem Aktivsauerstoff-Gehalt (Avox-Gehalt) hergetellt werden. Für die jeweils zu erzielenden Aktivsauerstoff-Gehalte im PCS werden wäßrige Wasserstoffperoxid-Lösungen mit unterschiedlichen Konzentrationen an H₂O₂ eingesetzt. Zur Herstellung hoher Avox-Gehalte von ca. 13,5 bis 14,5 Gew.-% werden demgemäß 30 bis 50 gew.-%ige Wasserstoffperoxid-Lösungen eingesetzt, wobei die Obergrenze insbesondere aber unter 40 Gew.-% liegt, wobei sich Konzentrationen von 30 bis 35 Gew.-% als sehr vorteilhaft erwiesen haben.

Insbesondere ermöglicht die Zweistufigkeit des erfindungsgemäßen Verfahrens die jeweils günstigsten Bedingungen sowohl für die Reaktion, die bereits innerhalb kurzer Zeiträume von insbesondere unter 2 h abgeschlossen ist (vorzugsweise in z.B. einigen Minuten bis zu etwa 0,5 bis 1 h), als auch für die Trocknung einzustellen. Hierbei kann in vorteilhafter Weise bereits während der Trocknung eine kombinierte Granulation zu einem Natriumpercarbonat-Granulat mit gezielt eingestellter Schüttdichte bzw. Korngröße stattfinden, indem als Kurzzeittrockner z.B. ein Intensivmischer mit Granuliereinrichtung oder ein Sprühtrockner mit integriertem Fließbett eingesetzt wird. Granulierhilfsmittel, beispielsweise Silikate und andere übliche Bindemittel können dabei gewünschtenfalls bereits der PCS-Slurry vor und/oder auch während der Trocknung mit gleichzeitiger Granulation zugegeben werden.

Das erfindungsgemäße Verfahren ist unabhängig von der Art der einzusetzenden Soda. Beispielsweise kann sowohl superleichte Soda mit Schüttgewichten kleiner als 0,50 kg/l, beispielsweise 0,20 kg/l bis 0,48 kg/l, leichte kalzinierte Soda mit einem Schüttgewicht von beispielsweise 0,50 bis 0,55 kg/l und schwere kalzinierte Soda mit 1,0 bis 1,1 kg/l Schüttgewicht eingesetzt werden. Besonders vorteilhaft ist das Verfahren unter Anwendung der leichten Sodaformen, beispielsweise insbesondere bei Einsatz leichter Soda mit Schütt-Gewichten von etwa 0,50 bis 0,55 kg/l. Leichte Sodaformen lassen sich unter weitgehend vollständiger Umsetzung der eingesetzten Soda mit Wasserstoffperoxid zu einem besonders homogenen Natriumpercarbonat verarbeiten. Der Einsatz leichter Sodaformen ermöglicht eine schnelle und vollständige Umsetzung, die innerhalb von einigen Minuten bis zu maximal etwa 1,5 h, insbesondere aber bereits innerhalb 1 h, abgeschlossen ist. Aber auch bei Einsatz schwerer kalzinierter Soda sind gegenüber den Verfahren des Standes der Technik kurze Reaktionszeiten und weitgehend homogene PCS-Partikel erhältlich, da durch den Feuchtigkeits- bzw. Wassergehalt im Reaktionsbrei ein ausreichend wasserhaltiges Medium vorliegt, wodurch Reaktions-, Umlöse- und Umkristallisationsvorgänge in vorteilhafter Weise gefördert werden. Gegenüber Trockenverfahren ist somit eine erhöhte Durchdringung der eingesetzten schweren Sodaformen mit Wasserstoffperoxid und somit die Gewinnung eines homogeneren Natriumpercarbonat auch mit höheren Aktivsauerstoff-Gehalten gewährleistet.

Die Durchführung des Schrittes a) des erfindungsgemäßen Verfahrens kann an sich in jedem Mischer erfolgen, der eine ausreichend schnelle und somit intensive Durchmischung von Feststoff (insbesondere Soda und gebildetes PCS) und eingesetztem Wasserstoffperoxid erlaubt. Geeignet sind z. B. folgende Mischer: Rührkessel mit für fließfähige Medien geeigneten Rührwerkzeugtypen, z.B. mit Propeller-, Scheiben-, Blatt-, Balken- oder Gitterrührer; sehr wirkungsvoll sind Intensivmischer, z.B. schnell laufende Rotor-Stator-Rührwerke und Turbomischer, die zusätzlich mit einem Messerkopf zum Zerschlagen größerer Agglomerate ausgerüstet sein können. Unter schneller bzw. intensiver Durchmischung wird jede Durchmischungsintensität, die einer Rührwerksumdrehungszahl von anfangs wenigstens ca. 100 U/min., insbesondere wenigstens ca. 250 U/min., entspricht; bei höheren Feststoffgehalten sind Durchmischungsintensitäten zweckmäßig, die Umdrehungszahlen von etwa 500 bis 800 U/min. entsprechen. Die Zuführung der festen Soda in den Mischer erfolgt zweckmäßig mittels einer Dosierschnecke.

Zur Temperaturkontrolle der exothermen Reaktion zwischen Soda und Wasserstoffperoxid kann der eingesetzte Mischer mit Kühleinrichtungen ausgerüstet sein. Dies ist insbesondere zweckmäßig, wenn nach einer bevorzugten Ausgestaltung der Erfindung die Umsetzung im Schritt a) zur Schonung des Aktivsauerstoffgehaltes in Wasserstoffperoxid bei einer anfänglichen Temperatur unterhalb von Raumtemperatur, vorzugsweise bei einer Temperatur von 3 bis 10°C, begonnen werden soll. Im Verlauf der Reaktion kann die Reaktionstemperatur durchaus bis auf Temperaturen unterhalb 80°C ansteigen, ohne daß die Produkteigenschaften, insbesondere der Aktivsauerstoffgehalt darunter leiden. Höhere Temperaturen als 80°C sollten jedoch vermieden werden, da sonst die Aktivsauerstoffausbeute durch vorzeitige Zersetzung von Wasserstoffperoxid beeinträchtigt wird. Für die Kühlung, die zweckmäßig über einem einfachen Kühlmantel erfolgen kann, reicht in der Regel die Kühlkapazität von Leitungswasser, so daß für die Kühlung gewöhnlich keine weitere Energie aufgebracht werden muß.

Das Verhältnis von Soda zu Aktivsauerstoffgehalt im Wasserstoffperoxid wird im erfindungsgemäßen Verfahren derart gesteuert, daß die Molverhältnisse dem zu erzielenden Avox-Gehalt im PCS entsprechen, wobei ein geringer Überschuß von Wasserstoffperoxid in der Größenordnung bis ca. 10% vorliegen darf. Bei der Ausführung der Erfindung wird das Molverhältnis von H₂O₂ zu Soda auf etwa 1,5 bis 1,65 (=1:0,67 bis 1:0,6) eingestellt, so daß ein Aktivsauerstoffgehalt im Natriumpercarbonat von wenigstens 13,5 Gew.-%, insbesondere von 13,5 bis 14,5 Gew.-%, erreicht wird.

Die im Schritt b) stattfindende Kurzzeittrocknung und gegebenenfalls kombinierte Granulation des im Schritt a) erhaltenen Reaktionsbreies kann sich unmittelbar an den ersten Reaktionsschritt anschließen, z.B. wenn als Kurzzeittrockner ein Granuliertrockner, z.B. Turbotrockner, eingesetzt wird. Ferner kann das Verfahren sowohl diskontinuierlich (Batch-weise) oder kontinuierlich durchgeführt werden.

Die Durchführung des Trocknungs- und Granulationsschrittes kann außer im bevorzugten Turbotrockner (Granuliertrockner) auch in anderen in an sich üblichen Kurzzeittrocknungsvorrichtungen bzw. Granulationsvorrichtungen unter den jeweils üblichen Bedingungen durchgeführt werden. So kann die Trocknung auch in Fließbetttrocknern, in Zerstäubungstrocknern oder wie in einer anderen bevorzugten Variante der Erfindung, die weiter unten ausführlicher beschrieben ist, in einem Sprühtrockner (ggf. auch mit integriertem Fließett) durchgeführt werden. Die Granulation kann bei allen Verfahrensvarianten der Erfindung in an sich üblicher Weise erfolgen, beispielsweise als Trockengranulation in einem Kompaktierverfahren oder als Feuchtgranulation (Aufbaugranulation) in Granulationsmischern wie z.B. Pflugscharmischer, Lödige-Mischer oder V-Mischer.

Eine bevorzugte Ausgestaltung des kombinierten Granulations- und Trocknungsschrittes umfaßt die Arbeitsweise in einem Turbotrockner, bei dem es sich dem Prinzip nach um einen mit Heizvorrichtung ausgestatteten Turbomischer handelt. Die Arbeitsweise im Turbotrockner empfiehlt sich insbesondere für kontinuierliche Verfahrensweisen, bei denen der Reaktionsbrei bzw. die Reaktionspaste unmittelbar nach der Umsetzung getrocknet und gleichzeitig granuliert wird. Im Granulations-/Trocknungsschritt können gewünschtenfalls Granulationshilfsstoffe (wie z.B. Silikate) und Stabilisatoren (wie organische Phosphonsäuren oder Phosphonate) zugesetzt werden. Die Trocknung und Granulation kann je nach verwendeter Vorrichtung so gesteuert werden, daß ein Natriumpercarbonat mit einer beliebigen Korngröße von etwa 150 bis etwa 1.300 µm hergestellt werden kann. In einer bevorzugten Ausführung der Erfindung werden insbesondere Natriumpercarbonate mit Korngrößen von 350 bis 1.300 µm hergestellt. Das erfindungsgemäße Verfahren ermöglicht somit, Natriumpercarbonate mit Korngrößenbereichen für leichte Waschmittel oder für kompakte Waschmittel mit Korngrößen von über 650 µm, vorzugsweise mit Korngrößen von ca. 800 bis 1.000 µm herzustellen. Die hierfür jeweils einzuhaltenden Granulationsbedingungen sind an sich nicht kritisch und entsprechen den üblichen Bedingungen der jeweils verwendeten Granulationsvorrichtung. Nach dem erfindungsgemäßen Verfahren lassen sich somit Natriumpercarbonate mit einer Schüttdichte von 0,2 kg/l bis 1,1 kg/l, vorzugsweise von 0,5 bis 1,1 kg/l, herstellen.

Die nach dem erfindungsgemäßen Verfahren hergestellten Natriumpercarbonatgranulate können gewünschtenfalls noch in an sich bekannter Weise mit Beschichtungen versehen werden. Geeignete Beschichtungsmaterialien sind, z. B. die im Stand der Technik beschriebenen Materialien wie z.B. Borate, Salze wie Na₂CO₃, NaCl, Na₂SO₄ und deren Gemische, organische Coatingmittel, z.B. Lactobionsäure und deren Derivate.

Ist eine zusätzliche Beschichtung des erfindungsgemäß hergestellten Natriumpercarbonat-Granulates erwünscht, so kann das Beschichtungsverfahren in zweckmäßiger Weise mit dem Granulations-/Trocknungsschritt kombiniert werden, z. B. indem man bereits dem im Verfahrensschritt a) erhaltenen Reaktionsbrei das Beschichtungsmittel (z. B. während einer Reifezeit oder auch erst unmittelbar vor dem zweiten Verfahrensschritt) zusetzt. Ebenso kann aber das Beschichtungsmaterial auch erst während des Granulations-/Trocknungsschrittes, beispielsweise in der letzten Phase dieses Verfahrensschrittes zugesetzt werden.

In einer weiteren bevorzugten Variante des erfindungsgemäßen Verfahrens zur Herstellung von Natriumpercarbonat-Partikeln wird als Kurzzeittrockner ein Sprühtrockner eingesetzt. In diesem Fall empfiehlt es sich, den im Schritt a) erhaltenen Reaktionsbrei in einer Naßzerkleinerung feinst zu vermahlen, und unmittelbar danach dem Sprühtrockner zuzuführen. Das erfindungsgemäße Verfahren dieser Variante zur Herstellung von Natriumpercarbonat-Partikeln (PCS-Partikel) zeichnet sich somit dadurch aus, daß
a) in einem Vorlagebehälter, je nach gewünschtem Aktivsauerstoff-Gehalt der herzustellenden PCS-Partikel, eine 30 bis 50 Gew.-%ige wäßrige Wasserstoffperoxid-Läsung vorgelegt und unter intensiver Durchmischung bei Temperaturen bis maximal 80°C, vorzugsweise bis maximal 40°C, eine ca. 1,1-fache bis 0,6-fache, auf das eingesetzte H₂O₂ bezogene molare Menge feste Soda zudosiert wird, und nach ausreichender Reaktionszeit unter Bildung einer PCS-Partikelaufschlämmung mit einem Wasseranteil von maximal etwa 40 gew.-%
b1) aus dem gemäß a) erhaltenen Reaktionsgemisch durch Naßzerkleinerung eine feinstvermahlene, homogene Partikel-Aufschlämmung gebildet wird, und
b2) unmittelbar danach im wesentlichen homogene PCS-Partikel mit einem Aktivsauerstoff-Gehalt von wenigstens 13,5 Gew.-% durch Sprühtrocknung der gemäß b1) erhaltenen Partikel-Aufschlämmung gewonnen werden.

Der Verfahrensschritt a) wird hierbei, wie oben bereits allgemein im Zusammenhang mit dem erfindungsgemäßen Verfahren beschrieben, durchgeführt. Die Naßzerkleinerung im Schritt b1) kann hierbei mit jeder an sich üblichen Naßzerkleinerungseinrichtung durchgeführt werden, die eine Feinstvermahlung von fließ- bzw. pumpfähigen wäßrigen Aufschlämmungen von Feststoffpartikeln ermöglicht. Insbesondere eignen sich hierzu Kolloidmühlen, die allgemein für die Zerkleinerung von fließfähigen Suspensionen eingesetzt werden. Solche Kolloidmühlen sind insbesondere schnellaufende Naßmühlen mit kegelförmigen oder scheibenförmigen Rotor-Stator-Anordnungen (Lochscheiben, Korundscheiben, Zahnscheiben), deren Mahlspalt vorzugsweise verstellbar ausgerüstet ist. Der mit solchen Kolloidmühlen erreichbare Feinheitsbereich "feinst" bedeutet eine Zerkleinerung auf Teilchengrößen von in etwa 1 bis 30 µm. Die in Schritt b1) erhaltene feinstvermahlene, homogene Partikel-Autschlämmung läßt sich trotz der hohen Feststoffgehalte von vorzugsweise etwa bis 63 Gew.-% (Herstellung von PCS mit 14,5 Gew.-% Avox; Verwendung von 35 Gew.-%iger H₂O₂-Lösung) sehr gut versprühen, ohne daß Verklumpungen oder ein Verstopfen der Sprühdüsen beobachtet wird. Gewünschtenfalls kann bei dieser Variante der Erfindung die Sprühtrocknung auch in einem Sprühtrockner mit integriertem Wirbelbett durchgeführt werden. In diesem Fall kann bereits eine gewisse Granulation der PCS-Partikel erzielt werden. Die Granulation sollte hierbei durch Zusatz geeigneter Granulierhilfsmittel unterstützt werden. Beispielsweise kann Wasserglas als Granulierhilfsmittel zugesetzt werden; zweckmäßigerweise wird Wasserglas erst unmittelbar vor der Kolloidmühle oder gewünschtenfalls auch erst im Fließbett-Teil des Sprühtrockners zugesetzt. Wasserglas wird hierbei insbesondere in Mengen von bis zu maximal 3 Gew.-% (berechnet als SiO₂ auf Trockensubstanz in der Slurry bezogenen) zugesetzt. Zweckmäßig sind Wasserglaszusätze in Mengen von ca. 1 Gew.-%, wobei insbesondere der Gesamtwasserglasgehalt in der Slurry nicht über 2 Gew.-% liegen sollte.

Außer in einem Sprühtrockner mit integriertem Fließbett kann die Granulation auch erst nach dem Trocknungsschritt b2) in an sich üblichen Granuliereinrichtungen wie sie weiter oben bereits beschrieben sind, in an sich üblicher Weise durchgeführt werden.

Auch die Variante des erfindungsgemäßen Verfahrens unter Einsatz eines Sprühtrockners kann diskontinuierlich (Batch-weise) oder kontinuierlich durchgeführt werden. Bei kontinuierlicher Durchführung wird im Vorlagegefäß zunächst ein Reaktionsbrei erzeugt und nach ausreichender anfänglicher Reaktionszeit (Verweildauer) der Reaktionsbrei abgezogen und den Verfahrensschritten b1) und b2) zugeführt, wobei gleichzeitig in den Vorlagebehälter neue, wäßrige Wasserstoffperoxid-Lösung in der erforderlichen Konzentration und die entsprechende Menge fester Soda zudosiert werden; die Stoffströme der Edukte bzw. des Reaktionsproduktes (Slurry) wird hierbei in an sich üblicher Weise in einem dynamischen Gleichgewicht gefahren und die entsprechenden Prozeßparameter wie Temperatur und Verweildauer beständig kontrolliert.

Das erfindungsgemäße Verfahren zeichnet sich durch folgende Vorteile aus:

Durch die Erfindung wird ein einfaches und in wirtschaftlicher Weise durchführbares Verfahren zur Batch-weisen und kontinuierlichen Herstellung von im wesentlichen homogenen PCS-Partikeln bzw. Granulaten mit variablen Aktivsauerstoffgehalten von 13,5 bis 14,5 Gew.-% zur Verfügung gestellt. Das erfindungsgemäße Verfahren arbeitet energieschonend, da einerseits während des Verfahrensschrittes a) keine Kälteenergie erforderlich ist, sondern die Temperatur allein über eine normale Wasserkühlung beherrscht werden kann, und andererseits im Vergleich zu den Sprühtrocknungsverfahren des Standes der Technik im Schritt b) weniger Wasser verdampft werden muß. Im Gegensatz zu den sogenannten Wet-Verfahren (Kristallisationsverfahren) entstehen erfindungsgemäß chloridfreie PCS-Produkte, wodurch die Korrosionsgefahr in der Anlage vermindert wird. Im Gegensatz zum Wet-Prozeß entsteht beim erfindungsgemäßen Verfahren kein zu entsorgendes Abwasser; beim Wet-Prozeß fällt demgegenüber chloridhaltiges Abwasser an, daß zudem vor der Entsorgung noch neutralisiert werden muß. Im Gegensatz zu den sogenannten Trockenverfahren, die lediglich Aktivsauerstoff-Gehalte von ca.
10 Gew.-% im PCS ermöglichen, kann nach dem erfindungsgemäßen Verfahren ein variabler Aktivsauerstoff-Gehalt von 13,5 bis 14,5 Gew.-% eingestellt werden. Der Aktivsauerstoff-Gehalt im PCS-Produkt ist nach dem erfindungsgemäßen Slurry-Verfahren somit gut steuerbar und an die jeweiligen Markterfordernisse bzw. unterschiedliche Produkte anpassungsfähig. Das nach dem erfindungsgemäßen Verfahren hergestellte PCS zeichnet sich zudem durch eine höhere Homogenität aus. Die erfindungsgemäß erhältlichen PCS-Partikel weisen daher günstige Stabilitätseigenschaften auf, obwohl die insbesondere nach dem Sprühtrocknungsverfahren erhaltenen kleinen Partikel größere Oberflächen aufweisen als beispielsweise die nach dem Trockenverfahren erhältlichen Produkte. Das Verfahren ist sehr flexibel, da es im Gegensatz zu den Trockenverfahren (dort werden Rohrreaktoren eingesetzt) in an sich gebräuchlichen Misch- und Trocknervorrichtungen durchgeführt werden kann. Die Flexibilität des erfindungsgemäßen Verfahrens zeigt sich auch darin, daß es nicht nur in diskontinuierlicher, sondern auch in kontinuierlicher Verfahrensweise gut steuerbar durchgeführt werden kann.

Die nachfolgenden Beispiele dienen zur weiteren Erläuterung der Erfindung, ohne diese jedoch in ihrem Umfang zu begrenzen.

### Beispiele

### Beispiel 1:

PCS wurde nach dem erfindungsgemäßen Verfahren in einer diskontinuierlichen Verfahrensweise (Batch-weise) hergestellt. Hierzu wurde unter Kühlung eine wäßrige Wasserstoffperoxid-Lösung in einem Mischer vorgelegt und nach Zusatz von Stabilisator Soda zudosiert. Als Reaktionsbrei erhielt man ein feuchtes Produkt, daß die Konsistenz einer Holzleim-artigen, zähen Paste aufwies. Der Reaktionsbrei wurde einer Kurzzeittrocknung unterworfen und die Eigenschaften des hergestellten Natriumpercarbonates untersucht. Die Herstellbedingungen und die Eigenschaften des PCS-Produktes sind nachfolgend zusammengestellt:

| | | |
|---|---|---|
| - Konzentration der wäßrigen Wasserstoffperoxid-Ausgangslösung | | 40 Gew.-% |
| - Additive (auf 100 g H₂O₂) | | 5 ml Turpinal SL |
| - Sodaqualität | | leichte Soda |
| - Mol-Verhältnis H₂O₂ : Soda | | 1,5 : 1 |
| - Zugabezeit der Soda | | 2 Minuten |
| - Gesamtreaktionszeit | | 12 Minuten |
| - Anfangstemperatur | | 8°C |
| - Maximaltemperatur | | 73°C (nach 5 Minuten) |
| - Endtemperatur | | 51°C |
| - Konsistenz des feuchten Produktes | | Holzleim-artige, zähe Paste |

| - Eigenschaften des trockenen PCS-Produktes: | | |
|---|---|---|
| a) | Avox | 14,5 Gew.-% |
| b) | Stabilverlust (2h/105°C) | 4,5 Gew.-% |
| c) | LKB-Wert (40°C) | 9,1 µW/g |
| | LKB-Wert in Waschmittelbasis | 28 µW/g |
| d) | DSC-Zersetzungspeaktemperatur | 161,7°C |

Anstelle der vorstehend beschriebenen diskontinuierlichen Herstellungsweise kann das PCS-Produkt erfindungsgemäß auch kontinuierlich hergestellt werden.

### Beispiel 2:

Nach diesem Beispiel wurde PCS unter Anwendung des Sprühtrocknungsverfahrens hergestellt. Dazu wurde zunächst ein Speisebrei (Slurry) für den Sprühtrockner in einem Rührkessel mit Kühlmantel hergestellt. Der Slurry wurde nachfolgend in einer Kolloidmühle feinstvermahlen und unmittelbar danach der Sprühtrocknung zugeführt.

### A. Speisezubereitung

Für die Sprühtrocknungsversuche wurden mehrere kleine Batches von etwa 100 kg Speise hergestellt. Die Optimierung der Speisezubereitung führte zu einer gut zerstäubbaren Slurry. Nachstehende Grundrezeptur und die Verfahrensweise für die Slurry-Zubereitung wurden als günstigste Bedingungen für die Erzielung eines Slurrys mit möglichst kleiner Partikelgröße und einer akzeptablen Viskosität gefunden:
In einen Rührkessel mit Kühlmantel (Leitungswasser bei 6 bis 7°C) wurden 45 kg 50 gew.-%ige wäßrige Wasserstoffperoxid-Lösung (15 bis 20°C) vorgelegt.
Es wurden zur Einstellung der H₂O₂-Konzentration 24 kg Leitungswaser (6 bis 7°C) zugesetzt.
Unter Kühlung und unter intensivem Umrühren (Rührflügel, 500 bis 800 U/min.) wurden langsam über eine Schneckendosierung 43 kg Soda (Na₂CO₃) in etwa 30 bis 60 Minuten zugesetzt.
Der vorstehend erhaltene Reaktionsbrei wurde in eine PUC-Kolloidmühle überführt. Hier erfolgte eine Vermahlung über 5 bis 10 Minuten, die Batch-weise mit 30 bis 35 kg Reaktionsbrei unter Rezirkulierung durchgeführt wurde. Die Vermahlung des Reaktionsbreies in der Kolloidmühle erfolgte jeweils unmittelbar vor der Sprühtrocknung.
Falls Wasserglas zugesetzt wurde, erfolgte dieses insbesondere zu Beginn der Kolloidmühlen-Vermahlung des Reaktionsbreies.
Weitere Angaben zur Speisezubereitung sind in Tabelle I angegeben.

**Tabelle I**

| Speise Rezeptur | | | | | | | | | | |
|---|---|---|---|---|---|---|---|---|---|---|
| Gemisch | Nr. | A | | | B | | | C | | D |
| für Versuch | Nr. | 1 | 2 | 3 | 4 | 5a | 5b | 6 | 7 | 8 |
| H₂O₂ 50 gew.-%ig (kg) | | 45,0 | | | 45,0 | | | 45,0 | | 22,5 |
| Wasser (kg) | | 24,5 | | | 19,0 | | | 24,0 | | 12,0 |
| Soda (kg) | | 43,0 | | | 43,0 | | | 43,0 | | 21,5 |
| Summe (kg) | | 112,5 | | | 107,0 | | | 112,0 | | 56,0 |
| Trockensubstanz¹⁾ Gew.-% | | 57 | | | 60 | | | 57 | | 57 |
| Menge vom Batch (kg) | | - | | | 30 | 30 | 47,5 | 30 | 35 | 56 |
| Wasserglas, 36 gew.-%ig (kg) | | - | | | 0,35 | 0,70 | 1,1 | - | 0,40 | 1,25 |
| Wasser, zusätzlich (kg) | | - | | | 0 | - | 6,0 | - | 0 | 0 |
| SiO₂ Gew.-% | | 0 | | | 0,5 | 1,0 | 1,0 | 0 | 0,5 | 1,0 |
| Trockensubstanz¹⁾ Gew.-% | | 57 | | | 60 | 50-55 | 53 | 57 | 57 | 57 |

| | | | | | | | | | | |
|---|---|---|---|---|---|---|---|---|---|---|
| ¹⁾ Ausgehend von der eingesetzten Soda-Menge berechnete Resultate in Gew.-% PCS (als Na₂CO₃·1,5 H₂O₂) | | | | | | | | | | |

### B. Sprühtrocknung

Der unter A. hergestellte Slurry wurde in den nachfolgenden Versuchen in einem Sprühtrockner mit integriertem Fließbett sprühgetrocknet.

### Daten der Sprühtrocknung:

- Speise:: 55 bis 57 Gew.-% TS, 25 bis 30°C
- Zerstäübung:: 2-Stoff Düse mit 3 bar Luftdruck
- Eingangstemperatur:: 250°C
- Eingangstemperatur (Fließbett) :: 55°C
- Ausgangstemperatur:: 84 bis 86°C

Es wurden folgende durchschnittliche Produkteigenschaften erzielt:
- Wassergehalt:: 0,0 % (Mettler, 15 Min./55°C)
- mittlere Partikelgröße:: 30 bis 70 µm (Malvern, trocknen)
- Schüttgewicht:: 550 bis 650 g/l
- Stampfgewicht:: 730 bis 830 g/l

Die Sprühtrocknung verlief jeweils problemlos. Bei der Speisezubereitung muß jedoch auf Klumpenbildung während der Lösung des Natriumcarbonates (Soda) und auf Verminderung der Viskosität (speziell bei Zusatz von Wasserglas) geachtet werden. Die sprühgetrockneten PCS-Partikel konnten ohne weiteres kompaktiert werden. Bei der Kompaktierung von sprühgetrocknetem Natriumpercarbonat-Pulver ist es möglich, nur Wasser als Agglomeringsflüssigkeit anzuwenden. Da die derart hergestellten Agglomerate jedoch noch schwach sind, empfiehlt sich der Zusatz von Wasserglas oder anderen Granulierhilfsmitteln zur Agglomerierungsflüssigkeit. Hierdurch wird die Stärke der Agglomerate verbessert. Es wurde gefunden, daß wenigstens 1 Gew.-% berechnet als SiO₂ auf Trockensubstanz zugesetzt werden sollte, jedoch nicht mehr als 3 Gew.-%. Sehr gute Produkte werden insbesondere bereits mit 1 Gew.-% SiO₂ erzielt, wobei diese Produkte nur noch bis zu ca. 5 Gew.-% unagglomeriertes Produkt enthielten.

Die Daten der durchgeführten Sprühtrocknungsversuche 1 bis 8 sind in Tabelle II wiedergegeben.

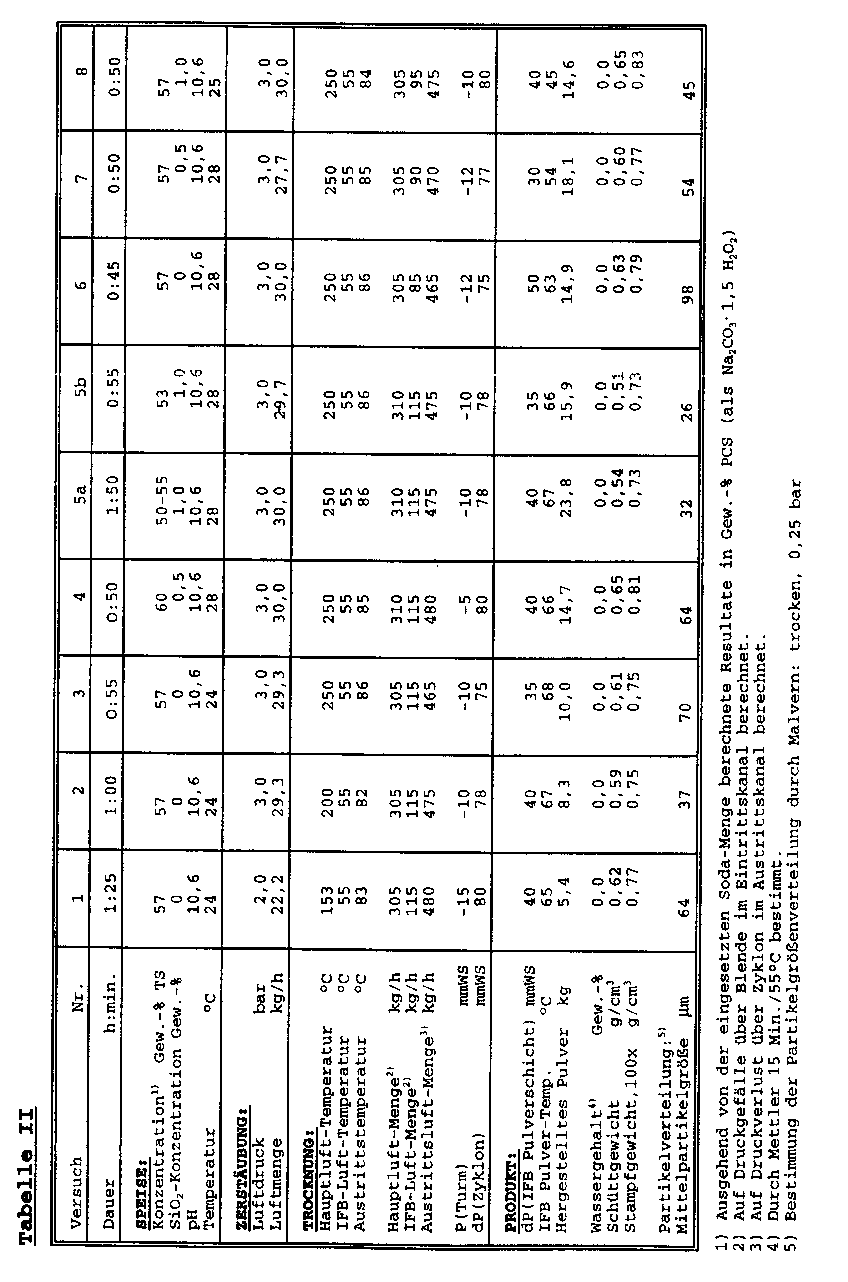

### Beispiel 3:

Die im Beispiel 2 hergestellten PCS-Sprühtrocknungspulver wurden in einer Kompaktierungsanlage vom Typ eines V-Mischers granuliert. Der V-Mischer ist ein Universal-Mischer/Granulator für leichte oder intensive Trockenmischung, FlüssigkeitFeststoff-Mischung und Granulierung. Die Kapazität des V-Mischers betrug 7,5 l/Batch und das maximale Schüttgewicht der Speise war 4 kg/l. Die maximale Geschwindigkeit der Messer betrug 17 m/s. Die Messer waren an einer demontierbaren, rostfreien Flüssigkeits-Dispersionswelle angebracht und dienten zur mechanischen Fluidisierung des Misch-/Granulations-Gutes. Hierdurch wurde die in das Pulver fein eingesprühte Agglomerisationsflüssigkeit gut verteilt und nach Erzielung eines gewissen Feuchtigkeitspunktes begann die Agglomerierung problemlos. Es wurden Granulationsversuche sowohl mit lediglich Wasser als Agglomeriungsflüssigkeit als auch unter Zusatz von Wasserglas durchgeführt. Die Verfahrensbedingungen und Ergebnisse sind in Tabelle III zusammengestellt.

**Tabelle III**

| Granulierversuche im V-Mischer mit nachfolgender Fließbett-Trocknung | | | | |
|---|---|---|---|---|
| Versuch Nr. | 1 | 2 | 3 | 4 |
| PCS-Pulver | | | | |
| - Menge (g) | 4000 | 3276 | 4003 | 4000 |
| - Schüttgewicht (g/ml) | 0,62 | 0,63 | 0,62 | 0,62 |

| Granulierflüssigkeit | | | | |
|---|---|---|---|---|
| - Wasser (g) | 843 | 142 | 686 | 686 |
| - Wasserglas (g)¹⁾ | 157 | 0 | 314 | 314 |
| - zusätzl. Wasser (g) | 0 | 0 | 305 | 315 |

| V-Mischer | | | | |
|---|---|---|---|---|
| - Spalteinstellung (mm) | 0,2 | 0,2 | 0,2 | 0,2 |
| - Messer,Anzahl/Größe | 8/groß | 8/groß | 8/groß | 8/groß |
| - Geschwindigkeit (U/min.) | 2450 | 2450 | 2450 | 2450 |
| - Zeit Flüssigkeitszugabe (s) | 900 | 180 | 900 | 720 |
| - Zugabezeit zusätzliches Wasser (s) | 0 | 0 | 300 | 300 |
| - Produktfeuchte (Gew.-%) | 17,1 | 20,0 | 17,0 | 20,9 |
| - Schüttgewicht (kg/l) | 0,63 | 0,70 | 0,68 | - |
| - Stampfgewicht 100 x (kg/l) | 0,91 | 0,93 | 0,92 | - |
| - Kornverteilung, D50 (µm) | 510 | - | - | - |

| Fließbett-Trockner | | | | |
|---|---|---|---|---|
| - Batch-Menge, (g) | 800 | 912 | 1000 | 1200 |
| - Zyklonfraktion (g) | 145 | 133 | 108 | 60 |
| - Zyklonfraktion (Gew.-%) | 18 | 15 | 11 | 5 |

| Produkt-Granulat, trocken | | | | |
|---|---|---|---|---|
| - Restfeuchte (Gew.-%) | 0,0 | 0,0 | 0,0 | 0,0 |
| - Schüttgewicht (kg/l) | 0,70 | 0,78 | 0,73 | 0,75 |
| - Stampfgewicht, 100 x (kg/l) | 0,87 | 0,85 | 0,77 | 0,81 |

| - Kornverteilung | | | | |
|---|---|---|---|---|
| D 90 (µm) | 1200 | 1100 | 1300 | 1000 |
| D 50 (µm) | 630 | 373 | 457 | 414 |
| D 10 (µm) | 250 | 148 | 171 | 177 |

| | | | | |
|---|---|---|---|---|
| 1) Wasserglas: Na₂O₂= 8 Gew.-%, SiO₂= 25,5 Gew.-% (1:3) | | | | |

### Legende

- PCS: = Natriumpercarbonat
- Avox: = Aktivsauerstoff(-Gehalt)
- Turpinal SL: = wäßrige 60 Gew.-%ige Lösung von 1-Hydroxyethan-1,1-diphosphonsäure (HEDP); Stabilisierungsmittel für Peroxide
- TS: = Trockensubstanz
- Wasserglas: = 36 gew.-%ige Lösung von Natriumsilikat in Wasser (8 Gew.-% Na₂O; 25,5 Gew.-% SiO₂)
- IFB: = Integriertes Fließbett
- h: = Stunde
- min.: = Minute
- mmWS: = mm Wassersäule
- P, dP: = Druck, Druckdifferenz
- U/min.: = Umdrehungen pro Minute
- DSC: = Differential Scanning Calorimetrie Durch DSC werden alle Vorgänge erfaßt, bei denen Energie verbraucht oder abgegeben wird, also endotherme und exotherme Phasentransformationen.
- LKB-Messungen: = Wärmefluß-Messungen Bei diesen Wärmefluß-Messungen geben die bei isothermen Meßbedingungen auftretenden Wärmeflüsse Hinweise auf die Stabilität des aktivsauerstoffhaltigen Produktes; insbesondere läßt sich auch die Stabilität des Produktes in Gegenwart von Waschmittelbestandteilen ermitteln, wenn die Wärmefluß-Messungen an Proben vorgenommen werden, in denen das aktivsauerstoffhaltige Produkt mit den Waschmittelbestandteilen gemischt vorliegt. Die Wärmefluß-Messungen wurden in einem LKB 2277 Bio Activity Monitor bei 40°C über einen Zeitraum von 20 h durchgeführt. Je niedriger der gemessene Wärmefluß, desto höher ist die Stabilität des aktivsauerstoffhaltigen Produktes in der Waschmittelbasis, bzw. umso stabiler sind die jeweiligen PCS-Teilchen.
- Avox-Verlust, Avox-Stabilität, Stabilverlust: = Zur Bestimmung der chemischen Stabilität des hergestellten Natriumpercarbonates wurde der Aktivsauerstoffverlust (Avox-Stabilität) bestimmt. Hierzu wurde das Produkt 2 h auf 105°C erwärmt und der durch Zersetzung bedingte Verlust an Aktivsauerstoff ermittelt. Die Bestimmung des Aktivsauerstoffes erfolgte nach an sich üblichen titrimetrischen Methoden.

## Patentansprüche

1. Verfahren zur Herstellung von Natriumpercarbonat-Partikeln (PCS-Partikel), dadurch gekennzeichnet, daß
a) in einem Vorlagebehälter, je nach gewünschtem Aktivsauerstoff-Gehalt der herzustellenden PCS-Partikel, eine 30 bis 50 gew.-%ige wäßrige Wasserstoffperoxid-Lösung vorgelegt und unter intensiver Durchmischung bei Temperaturen bis maximal 80°C eine ca. 1,1-fache bis 0,6-fache, auf das eingesetzte H₂O₂ bezogene molare Menge feste Soda zudosiert wird, und nach ausreichender Reaktionszeit unter Bildung einer PCS-Partikel-Aufschlämmung mit einem Wasseranteil von maximal etwa 40 Gew.-%
b) die gebildeten PCS-Partikel mit einem Aktivsauerstoff-Gehalt von wenigstens 13,5 Gew.-% durch eine Kurzzeittrocknung aus der gemäß a) erhaltenen Partikel-Aufschlämmung gewonnen werden und gegebenenfalls die PCS-Partikel gleichzeitig und/oder nachfolgend noch granuliert werden.

2. Verfahren nach Anspruch 1, dadurch gekennzeichnet, daß man als feste Soda (Natriumcarbonat) leichte Soda einsetzt.

3. Verfahren nach Anspruch 1, dadurch gekennzeichnet, daß man die Umsetzung im Schritt a) bei einer Temperatur unterhalb von Raumtemperatur, vorzugsweise bei einer Temperatur von 3 bis 10°C beginnt.

4. Verfahren nach Anspruch 1, dadurch gekennzeichnet, daß man die Umsetzung im Schritt a) in einem Intensivmischer durchführt.

5. Verfahren nach Anspruch 1, dadurch gekennzeichnet,daß man das Verfahren kontinuierlich durchführt.

6. Verfahren nach Anspruch 1, dadurch gekennzeichnet, daß man Natriumpercarbonat-Partikel mit einem Aktivsauerstoff-Gehalt von 13,5 bis 14,5 Gew.-% herstellt.

7. Verfahren nach Anspruch 1, dadurch gekennzeichnet, daß man im Schritt b) die Kurzzeittrocknung und gegebenenfalls die Granulation der Partikel-Aufschlämmung in einem Granuliertrockner durchführt.

8. Verfahren nach Anspruch 7, dadurch gekennzeichnet, daß man Natriumpercarbonat-Partikel mit einer Korngröße von 350 bis 1.300 µm herstellt.

9. Verfahren nach Anspruch 7, dadurch gekennzeichnet, daß man Natriumpercarbonat-Partikel mit einer Schüttdichte von 0,2 kg/l bis 1,1 kg/l, vorzugsweise 0,5 bis 1,1 kg/l, herstellt.

10. Verfahren nach Anspruch 1, dadurch gekennzeichnet, daß man im Schritt b) die Kurzzeittrocknung der Partikel-Aufschlämmung als Sprühtrocknung durchführt.

11. Verfahren nach Anspruch 10 zur Herstellung von Natriumpercarbonat-Partikeln (PCS-Partikel), dadurch gekennzeichnet, daß
a) in einem Vorlagebehälter, je nach gewünschtem Aktivsauerstoff-Gehalt der herzustellenden PCS-Partikel, eine 30 bis 50 gew.-%ige wäßrige Wasserstoffperoxid-Lösung vorgelegt und unter intensiver Durchmischung bei Temperaturen bis maximal 80°C eine ca. 1,1-fache bis 0,6-fache, auf das eingesetzte H₂O₂ bezogene molare Menge feste Soda zudosiert wird, und nach ausreichender Reaktionszeit unter Bildung einer PCS-Partikelaufschämmung mit einem Wasseranteil von maximal etwa 40 Gew.-%
b1) aus dem gemäß a) erhaltenen Reaktionsgemisch durch Naßzerkleinerung eine feinstvermahlene, homogene Partikel-Aufschlämmung gebildet wird, und
b2) unmittelbar danach im wesentlichen homogene PCS-Partikel mit einem Aktivsauerstoff-Gehalt von wenigstens 13,5 Gew.-% durch Sprühtrocknung der gemäß b1) erhaltenen Partikel-Aufschlämmung gewonnen werden.

12. Verfahren nach Anspruch 11, dadurch gekennzeichnet, daß man die Naßzerkleinerung im Schritt b1) in einer Kolloidmühle ausführt.

## Claims

1. Process for the preparation of sodium percarbonate particles (PCS particles), characterized in that
a) depending on the desired active oxygen content in the PCS particles to be prepared, a 30 to 50% strength by weight aqueous hydrogen peroxide solution is introduced into a receiving vessel, and, with intensive mixing at temperatures up to at most 80°C, an approximately 1.1-fold to 0.6-fold molar amount, based on the H₂O₂ used, of solid soda is metered in, and after sufficient reaction time with the formation of a PCS particle slurry having a water content of at most about 40% by weight
b) the PCS particles formed having an active oxygen content of at least 13.5% by weight are obtained from the particle slurry, obtained as in a), by short-retention-time drying, and optionally the PCS particles are also granulated at the same time and/or subsequently.

2. Process according to Claim 1, characterized in that light soda is used as solid soda (sodium carbonate).

3. Process according to Claim 1, characterized in that the reaction in step a) starts at a temperature below room temperature, preferably at a temperature from 3 to 10°C.

4. Process according to Claim 1, characterized in that the reaction in step a) is carried out in an intensive mixer.

5. Process according to Claim 1, characterized in that the process is carried out continuously.

6. Process according to Claim 1, characterized in that sodium percarbonate particles having an active oxygen content of from 13.5 to 14.5% by weight are prepared.

7. Process according to Claim 1, characterized in that, in step b), the abort-retention-time drying and optionally the granulation of the particle slurry are carried out in a granulation drier.

8. Process according to Claim 7, characterized in that sodium percarbonate particles having a particle Size of from 350 to 1300 µm are prepared.

9. Process according to Claim 7, characterized in that sodium percarbonate particles having a bulk density of from 0.2 kg/l to 1.1 kg/l, preferably 0.5 to 1.1 kg/l, are prepared.

10. Process according to Claim 1, characterized in that, in step b), the short-retention-time drying of the particle slurry is carried out as spray drying.

11. Process according to Claim 10, for the preparation of sodium percarbonate particles (PCS particles), characterized in that
a) depending on the desired active oxygen content in the PCS particles to be prepared, a 30 to 50% strength by weight aqueous hydrogen peroxide solution is introduced into a receiving vessel, and, with intensive mixing at temperatures up to at most 80°C, an approximately 1.1-fold to 0.6-fold molar amount, based on the H₂O₂ used, of solid soda is metered in, and after sufficient reaction time with the formation of a PCS particle slurry having a water content of at most about 40% by weight
b1) the reaction mixture obtained as in a) is wet-ground to form a very finely ground, homogeneous particle slurry, and
b2) immediately thereafter essentially homogeneous PCS particles having an active oxygen content of at least 13.5% by weight are obtained by spray drying the particle slurry obtained as in b1).

12. Process according to Claim 11, characterized in that the wet grinding in step b1) is carried out in a colloid mill.

## Revendications

1. Procédé de production de particules de percarbonate de sodium (particules de PCS), caractérisé on ce que
a) on introduit dans un récipient collecteur, on fonction de la teneur on oxygène actif souhaitée des particules de PCS à préparer, une solution de peroxyde d'hydrogène aqueux à 30 à 50 % en poids et on ajoute sous agitation intensive à des températures jusqu'au maximum de 80 °C, une quantité molaire par rapport au H₂O₂ utilisé de 1,1 fois à 0,6 fois de soude solide, et, après un temps de réaction suffisant, on formant une suspension de particules de PCS avec une teneur en eau d'au maximum environ 40 % en poids
b) on récupère les particules de PCS formés avec une teneur on oxygène actif d'au moins 13,5 % on poids par un séchage rapide de la suspension de particules obtenues conformément à l'étape a) et, le cas échéant, on granule encore les particules de PCS simultanément et/ou subséquemment.

2. Procédé selon la revendication 1, caractérisé on ce qu'on utilise, à titre de soude solide, de la soude légère.

3. Procédé selon la revendication 1, caractérisé on ce qu'on commence la réaction à l'étape a) à une température inférieure à la température ambiante, de préférence à une température de 3 à 10 °C.

4. Procédé selon la revendication 1, caractérisé en ce qu'on effectue la réaction à l'étape a) dans un agitateur intensif.

5. Procédé selon la revendication 1, caractérisé en ce qu'on effectue le procédé de manière continue.

6. Procédé selon la revendication 1, caractérisé on ce qu'on produit des particules de percarbonate de sodium avec une teneur on oxygène actif de 13,5 à 14,5 % en poids.

7. Procédé selon la revendication 1, caractérisé on ce qu'on effectue à l'étape b), le séchage rapide et éventuellement la granulation de la suspension de particules dans un séchoir de granulation.

8. Procédé selon la revendication 7, caractérisé on ce qu'on produit des particules de percarbonate de sodium avec une granulométrie de 360 à 1.300 µm.

9. Procédé selon la revendication 7, caractérisé on ce qu'on produit des particules de percarbonate de sodium avec une densité apparente de 0,2 kg/l à 1,1 kg/l, de préférence de 0,5 à 1,1 kg/l.

10. Procédé selon la revendication 1, caractérisé on ce qu'on effectue à l'étape b), le séchage rapide de la suspension de particules sous forme d'un séchage par pulvérisation.

11. Procédé selon la revendication 10, pour la production de particules de percarbonate de sodium (particules de PCS), caractérisé en ce que
a) on introduit dans un récipient collecteur, en fonction de la teneur en oxygène actif souhaitée des particules de PCS à préparer, une solution de peroxyde d'hydrogène aqueux à 30 à 50 % on poids et on ajoute sous agitation intensive à des températures jusqu'au maximum de 80 °C, une quantité molaire par rapport au H₂O₂ utilisé de 1,1 fois à 0,6 fois de soude solide, et, après un temps de réaction suffisant, en formant une suspension de particules de PCS avec une teneur on eau d'au maximum environ 40 % on poids
b1) on forme à partir du mélange réactionnel obtenu conformément à l'étape a) par broyage humide, une suspension de particules homogènes, finement moulues, et
b2) on récupère immédiatement après des particules de PCS essentiellement homogènes avec une teneur on oxygène actif d'au moins 13,5 % en poids par séchage par pulvérisation de la suspension de particules obtenue conformément à l'étape b1).

12. Procédé selon la revendication 11, caractérisé on ce qu'on effectue le broyage humide à l'étape b1) dans un concasseur de colloïdes.
